# EUROPEAN PATENT APPLICATION

(11) **EP 1 505 519 A2**
(43) Date of publication of application: **09.02.2005**
(21) Application number: 04018610.8
(22) Date of filing: 05.08.2004
(51) Int. Cl.: G06F 17/30

(54) **Data processing method and system**

(30) Priority: 07.08.2003 JP 2003206567
(71) Applicant: AISIN AW CO., LTD., Anjo-shi Aichi 444-1192 (JP)
(72) Inventor: Sakakibara, Seiji, Okazaki-shi Aichi 444-8564 (JP); Yamada, Kunihiro, Okazaki-shi Aichi 444-8564 (JP); Tooyama, Yasuhiro, Okazaki-shi Aichi 444-8564 (JP); Kawauchi, Hiroshi, Okazaki-shi Aichi 444-8564 (JP)
(74) Representative: Kramer Barske Schmidtchen

(57) **Abstract**

A data processing center includes a receiver that receives a present position of a portable terminal transmitted from the portable terminal, at least one controller that determines a moving means that is moving the portable terminal based upon the present position and retrieves data related to the determined moving means, and a transmitter that transmits the retrieved data related to the determined moving means to the portable terminal.

## Description

### INCORPORATION BY REFERENCE

The disclosure of Japanese Patent Application No. 2003-206567 filed on August 7, 2003 including the specification, drawings and abstract are incorporated herein by reference in their entirety.

### BACKGROUND OF THE INVENTION

### 1. Field of Invention

The present invention relates to a data processing center, to a data processing method and to a data providing system.

### 2. Description of Related Art

There has been proposed a data providing system as disclosed in JP-A-2002-304408. According to this data providing system, a direction of travel and a moving speed are calculated from the data indicating a present position of a user of the portable terminal, and a moving means is specified to be, for example, a public transportation facility, an automobile or walking without requiring the user to input data to the moving means.

According to the above data providing system, the present position and moving means are specified, a local range is calculated depending upon the specified moving means, and data within the range are offered to a user. However, the data obtained in the local range often includes unnecessary data which may be cumbersome for the user. Or, conversely, the data obtained in the local range may not be sufficient for the user.

### SUMMARY OF THE INVENTION

Thus, various exemplary embodiments of this invention provide a data processing center, data processing method, and a data providing system that can determine the moving means from the data of the present position and can offer to the user the data necessary for the determined moving means.

Various exemplary embodiments of this invention provide a data processing center including a receiver that receives a present position of a portable terminal transmitted from the portable terminal, at least one controller that determines a moving means that is moving the portable terminal based upon the present position and retrieves data related to the determined moving means, and a transmitter that transmits the retrieved data related to the determined moving means to the portable terminal.

Various exemplary embodiments of this invention provide a data processing center including a receiver that receives a present position of a portable terminal transmitted from the portable terminal; at least one controller that calculates a moving speed based on a degree of change of the present position and determines a moving means of the portable terminal to be a high speed moving body when the calculated moving speed is high; determines the high speed moving body to be part of a public transportation facility when the present position is in agreement with a route network of the public transportation facility; specifies the moving body within the public transportation facility by comparing diagram data of the public transportation facility with the present position and a travel direction determined by a change of the present position; and retrieves time table data related to the specified moving body; and a transmitter that transmits the retrieved time table data to the portable terminal.

Various exemplary embodiments of this invention provide a data processing center including a receiver that receives a present position of a portable terminal transmitted from the portable terminal at least one controller that calculates a moving speed based on a change of the present position and determines, based on the calculated moving speed, whether the moving means of the portable terminal is a high speed moving body or a low speed moving body; compares, if the moving means is a high speed moving body, the present position with a route network of a public transportation facility, and determines whether the high-speed moving body is part of the public transportation facility; specifies, when the moving body is determined to be part of the public transportation facility, the moving body within the public transportation facility by comparing diagram data of the public transportation facility with the present position and a travel direction determined by a change of the present position; compares, when the moving body is determined to not be part of the public transportation facility, the present position with a road network to determine whether the moving body is an automobile; compares, when the moving means is a low speed moving body, the present position with map data to determine whether the low-speed moving body is located in the vicinity of a station of the public transportation facility; retrieves, when the moving body has been specified within the public transportation facility, the time table data of a the specified moving body; retrieves, when the low speed moving body is located in the vicinity of the station of the public transportation facility, time table data of the station; and retrieves, when the moving body is determined to be an automobile, road traffic data based on the present position and based on a travel direction determined by a change of the present position; and a transmitter that transmits the retrieved data to the portable terminal.

Various exemplary embodiments of this invention provide a data providing system including a portable terminal including at least one controller that detects a present position and a transmitter that transmits the present position; and a data processing center that includes a receiver that receives the present position; at least one controller that determines a moving means that moves the portable terminal based on the present position and retrieves data related to the determined moving means; and a transmitter that transmits the retrieved data to the portable terminal.

Various exemplary embodiments of this invention provide a method for providing data to a portable terminal including receiving a present position of a portable terminal transmitted from the portable terminal; determining a moving means that moves the portable terminal based upon the present position; retrieving data related to the determined moving means; and transmitting the retrieved data to the portable terminal.

### BRIEF DESCRIPTION OF THE DRAWINGS

Exemplary embodiments of the invention will now be described with reference to the accompanying drawings, wherein:

Fig. 1 is a block diagram illustrating a first exemplary embodiment according to the invention.

Fig. 2 is a flowchart illustrating an example of the action of a controller in the data providing system of Fig. 1.

Fig. 3 is a flowchart illustrating an example of the action of the server in the data providing system of Fig. 1.

Fig. 4 is a flowchart illustrating an exemplary user authentication output processing method of Fig. 2.

Fig. 5 is a flowchart illustrating an exemplary user authentication processing method of Fig. 3.

Fig. 6 is a flowchart illustrating an exemplary present position data transmission processing method of Fig. 2.

Fig. 7 is a flowchart illustrating an exemplary present position data reception/database matching processing method of Fig. 3.

Fig. 8 is a flowchart illustrating an exemplary present position data reception/database matching processing method of Fig. 3.

Fig. 9 is a flowchart illustrating an exemplary present position data reception/database matching processing method of Fig. 3.

Fig. 10 is a flowchart illustrating an exemplary retrieved data reception processing method of Fig. 2.

Fig. 11 is a flowchart illustrating an exemplary retrieved data transmission processing method of Fig. 3.

Fig. 12 is a flowchart illustrating an exemplary present position data transmission processing method according to a second exemplary embodiment.

Fig. 13 is a flowchart illustrating an exemplary present position data reception/database matching processing method according to the second exemplary embodiment.

Fig. 14 is a flowchart illustrating an exemplary present position data reception/database matching processing method according to the second exemplary embodiment.

Fig. 15 is a flowchart illustrating an exemplary present position data reception/database matching processing method according to the second exemplary embodiment.

### DETAILED DESCRIPTION OF EXEMPLARY EMBODIMENTS

### I. First Exemplary Embodiment

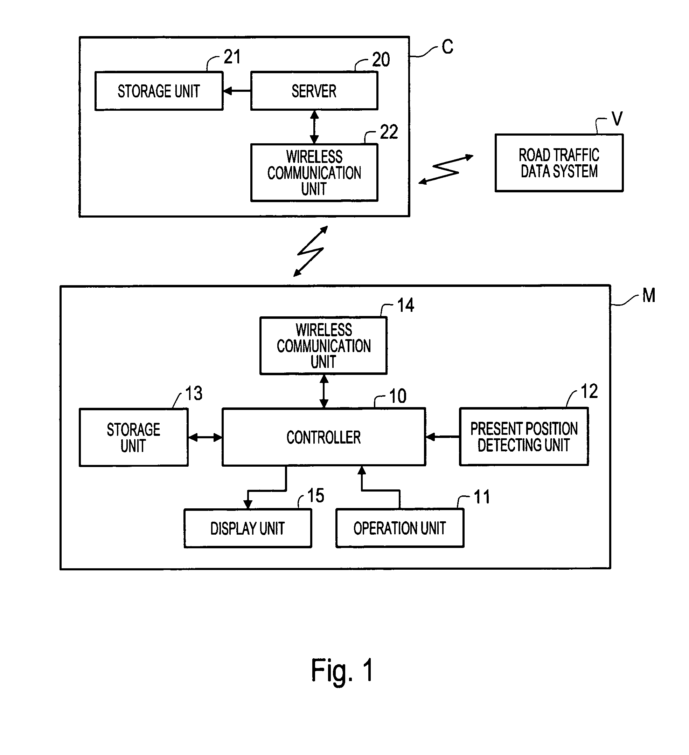

Fig. 1 illustrates an exemplary data providing system according to the first exemplary embodiment. The data providing system comprises a portable terminal M for transmitting the data and a data processing center C. The portable terminal M, may be, for example, a cell phone, PHS (personal handyphone system), PDA (personal digital assistant) having a wireless communication function, and/or the like.

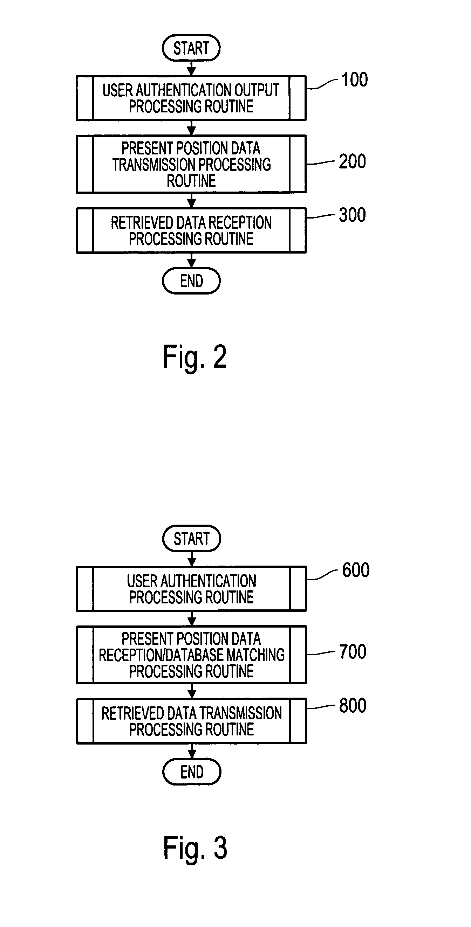

Referring to Fig. 1, the portable terminal M may include a controller 10, an operation unit 11, a present position detecting unit 12, a storage unit 13, a wireless communication unit 14 and a display unit 15. The controller 10 is capable of executing the exemplary methods according to the flowcharts illustrated in Figs. 2, 4, 6 and 10. The controller may also effect authentication transmission processing, as well as present position data transmission processing and display processing based on detection outputs from the present position detecting unit 12, operation input through the operation unit 11 and data stored in the storage unit 13.

The operation unit 11 can input operation input data to the controller 10. The present position detecting unit 12 comprises, for example, a GPS receiver unit which receives electromagnetic waves transmitted from a man-made satellite system, and can detect the present position of the portable terminal M together with the present time. Instead of the GPS receiver unit, the present position detecting unit 12 may instead simultaneously receive electromagnetic waves emitted from a multiplicity of ground stations for use with the portable terminal M, measure the distances from the portable terminal M to the ground stations, and triangulate specify the position of the portable terminal M from the obtained distances.

The storage unit 13 may be, for example, a semiconductor memory for storing the output data of the controller 10. The wireless communication unit 14 is capable of transmitting the output of the controller 10 and inputting the received data to the controller 10. The wireless communication unit 14 may also execute wireless communication with the data processing center C (described later) via a ground station of the portable terminal M. Being controlled by the controller 10, the display unit 15 can display the data necessary for the portable terminal M.

The data processing center C may transmit data in response to a request from the portable terminal M, and can include a server 20, a storage unit 21 and a wireless communication unit 22. The server 20 is capable of executing the exemplary methods illustrated in Figs. 3, 5, 7 to 9 and 11. The server 20 may also effect matching processing of authentication data, processing for matching the public transportation facility route networks, processing for matching the public transportation facility diagram data and retrieved data transmission processing based upon, for example, the data stored in the storage unit 21 and upon the communication data of the wireless communication unit 22.

The storage unit 21 can comprise, for example, a hard disk, and can store public transportation facility route network data, diagram data, time table data, road network data, public transportation facility station coordinate data and local data in a manner that they can be read out by the server 20.

The wireless communication unit 22 can comprise, for example, a router, and is connected to a ground station of the portable terminal M through, for example, a wireless telephone circuit. Therefore, the wireless communication unit 22 can transmit data from the server 20 or can receive data from the portable terminal M. The wireless communication unit 22 may receive road traffic data from a road traffic data system V and inputs that data to the server 20 as well.

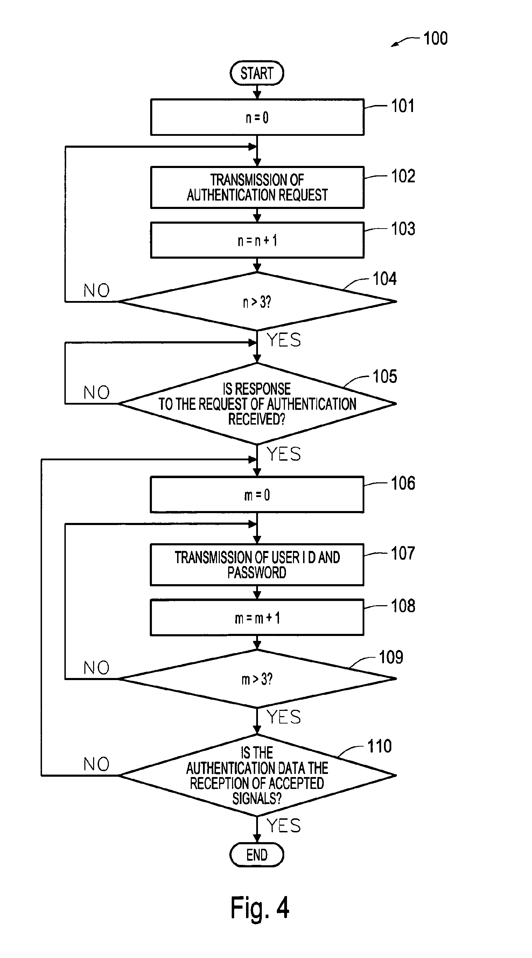

In the thus constituted first exemplary embodiment, the controller 10 starts executing, for example, the exemplary operation input processing method according to the flowchart of Fig. 2 in response to an input from the operation unit 11 of the portable terminal M to process, for example, the exemplary user authentication output processing method 100 (see Figs. 2 and 4).

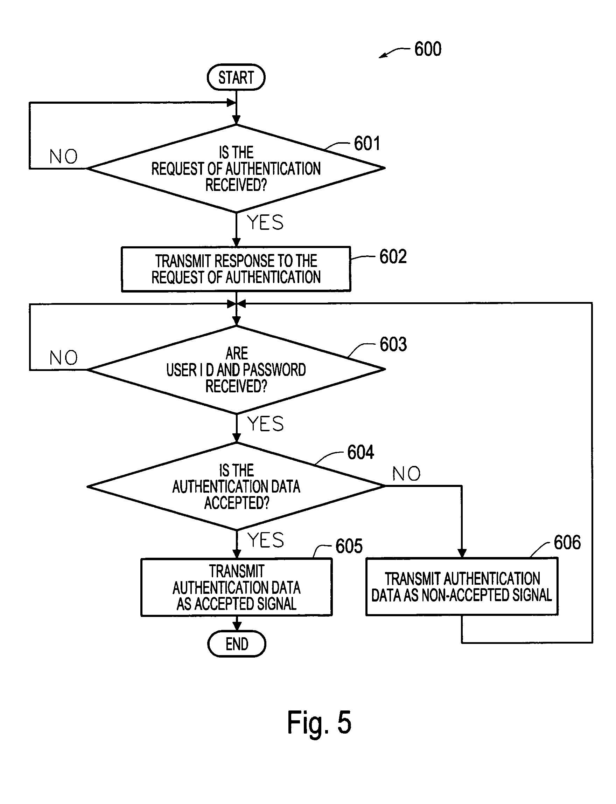

In the data processing center C, on the other hand, the server 20 may be executing, for example, the exemplary server method according to the flowchart of Fig. 3. When the server method proceeds to, for example, the exemplary user authentication processing method 600 (see Figs. 3 and 5), the processing of the exemplary user authentication processing method 600 corresponds to the processing of the user authentication output processing method 100. The processing of the exemplary user authentication processing method 600 will now be described corresponding to the exemplary user authentication output processing method 100.

In the user authentication output processing method 100 of Fig. 4, a variable n is cleared to n = 0 in step 101. Then, in step 102, a request for authentication is transmitted to specify the user of the portable terminal M. The wireless communication unit 14 transmits the above request for authentication from the controller 10 to the wireless communication unit 22 in the data processing center C.

In the portable terminal M, after the above processing in step 102, the variable is updated as n = n + 1 = 1 in step 103, and is judged to be NO in step 104 because thus far n ≤ 3. In step 104, n > 3 is used to ensure that the server 20 reliably receives the request for authentication from the wireless communication unit 14 through the wireless communication unit 22 in spite of any disturbance that might occur (i.e., according to this example the authentication request is transmitted four times in case one or more transmissions are corrupted by a disturbance).

Thereafter, the cyclic processing of step 102 to step 104 is repeated to repetitively produce the request for authentication. Then, the wireless communication unit 14 repetitively transmits the above request for authentication to the wireless communication unit 22. In step 103, however, when the variable data n is added and updated to n = n + 1 = 4, the judgment in step 104 becomes YES. Then, the request for authentication is no longer output from the controller 10.

In the data processing center C, when the wireless communication unit 22 receives the request for authentication transmitted from the wireless communication unit 14 as described above, the server 20 renders the judgment YES in step 601 in the exemplary user authentication processing method 600 (see Fig. 5).

In response to the judgment YES in step 601, the server 20 in step 602 outputs a response to the request for authentication. Specifically, the wireless communication unit 22 transmits a response to the request for authentication to the wireless communication unit 14.

In the portable terminal M, upon receipt of the response to the request for authentication transmitted in step 602 in the data processing center C, the judgment YES is rendered in step 105. Therefore, the controller 10 clears a variable m to m = 0 in step 106. Then, in step 107, a user ID and a password for specifying the user of the portable terminal M are output as authentication data. The wireless communication unit 14 transmits the authentication data from the controller 10 to the wireless communication unit 22.

In the portable terminal M, after the above processing in step 107, the variable is updated to be m = m + 1 = 1 in step 108, and is judged to be NO in step 109 because thus far m ≤ 3. Here, in step 109, m > 3 is used as a reference so that the server 20 reliably receives the authentication data from the wireless communication unit 14 through the wireless communication unit 22 in spite of any disturbance that might occur (i.e., according to this example the authentication request is transmitted four times in case one or more transmissions are corrupted by a disturbance).

Thereafter, the cyclic processing of step 107 to step 109 is repeated to repetitively produce the authentication data. Then, the wireless communication unit 14 repetitively transmits the above authentication data to the wireless communication unit 22. In step 108, however, when the variable data m is updated to m = m + 1 = 4, the judgment in step 109 becomes YES. Then, the authentication data is no longer output from the controller 10.

In the data processing center C, when the wireless communication unit 22 receives the authentication data transmitted from the wireless communication unit 14 as described above, the server 20 renders the judgment YES in step 603. In response to the judgment YES in step 603, the authentication data is compared in step 604 with the authentication data (including user ID and password) of the server 20. When the respective authentication data are not in agreement, the judgment becomes NO in step 604. Therefore, a non-agreement signal is output in step 606. The wireless communication unit 22 then transmits the authentication data to the wireless communication unit 14 together with the non-agreement signal.

When the authentication data is transmitted together with the non-agreement signal to the wireless communication unit 14, the judgment is rendered to be NO in step 110, and the authentication data starting with step 106 are transmitted again to the wireless communication unit 22 from the wireless communication unit 14 to re-execute the processing described above.

On the other hand, when the authentication data is in agreement in step 604 with the authentication data of the server 20, it means that the authentication data is normal. Therefore, the server 20 renders the judgment YES in step 604. Then, the server 20 in step 605 outputs an accepted signal, and the wireless communication unit 22 transmits the authentication data and accepted signal to the wireless communication unit 14.

As described above, as the wireless communication unit 14 receives the authentication data as an accepted signal, the controller 10 renders the judgment YES in step 110 to end the processing of the user authentication output processing method 100 and the processing of the user authentication processing method 600.

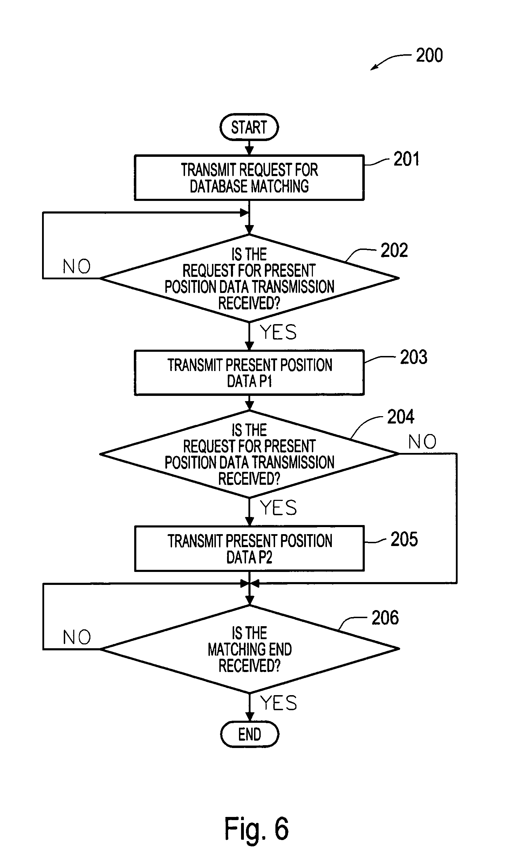

Then, in the portable terminal M, the controller 10 outputs the present position detected by the present position detecting unit 12, and executes, for example, the exemplary present position data transmission processing method 200 (Figs. 2 and 6) to match the present position with the moving means used by the user by using the database that has been stored in the storage unit 21 in the data processing center C. It should be appreciated that the moving means can include, trains, airplanes, automobiles, taxis, busses, boats, bicycles, motorcycles, scooters, walking, jogging, or any other means for moving from one point to another point.

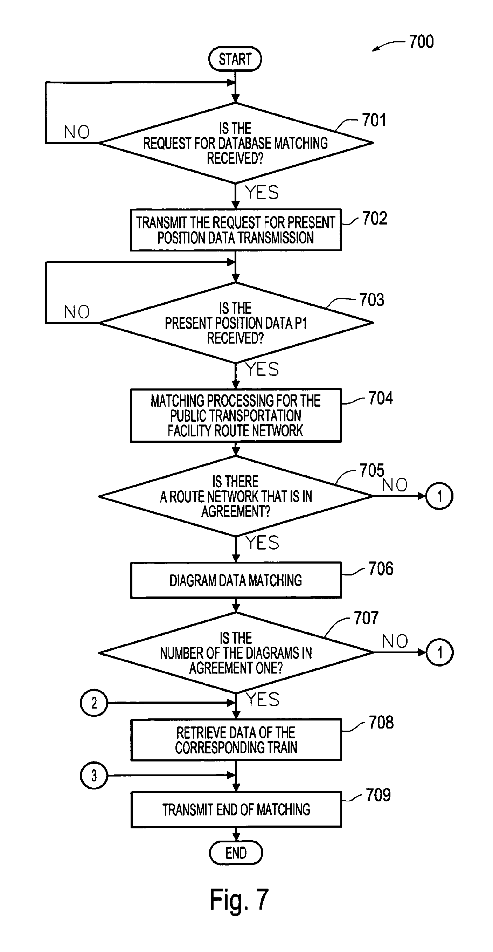

In the data processing center C, on the other hand, the server 20 is capable of executing the processing of the exemplary present position data reception/database matching processing method 700 (Figs. 3 and 7) corresponding to the processing of the exemplary present position data transmission processing method 200. The processing of the exemplary present position data reception/database matching processing method 700 will now be described corresponding to the processing of the exemplary present position data transmission processing method 200.

In the exemplary present position data transmission processing method 200 of Fig. 6, the controller 10 in step 201 produces a database matching request for the user of the portable terminal M. Then, the wireless communication unit 14 transmits the database matching request from the controller 10 to the wireless communication unit 22.

In the data processing center C, when the wireless communication unit 22 receives the database matching request transmitted from the wireless communication unit 14 as described above, the server 20 renders the judgment YES in step 701 in the exemplary present position data reception/database matching processing method 700. Then, in step 702, the server 20 produces a present position data transmission request, and the wireless communication unit 22 transmits the present position data transmission request to the wireless communication unit 14.

In the portable terminal M, when the wireless communication unit 14 receives the present position data transmission request of step 702 from the data processing center C, the controller 10 renders the judgment YES in step 202. Then, the controller 10 in step 203 produces present position data P1 detected by, for example, the present position detecting unit 12, and the wireless communication unit 14 transmits the present position data P1 to the wireless communication unit 22.

In the data processing center C, upon receipt of the present position data P1 as described above, the wireless communication unit 22 renders the judgment YES in step 703. Then, the server 20 in step 704 compares the present position data P1 that is received with the database stored in the storage unit 21 and determines whether the data is in agreement with the public transportation facility route network. When there is data matching the present position data P1 in the public transportation facility route network, the judgment YES is rendered in step 705. In step 706 the server 20 selects a diagram containing the matching data from the database stored in the storage unit 21 and determines whether there is a public transportation facility corresponding to the present position data P1. When the number of the corresponding public transportation facilities is one, a train which the user of the portable terminal M is on board is specified, and the judgment YES is rendered in step 707. Then, the server 20 in step 708 retrieves, from the diagram data stored in the storage unit 21, the time data related to the arrival at the station of the train on which the user is riding.

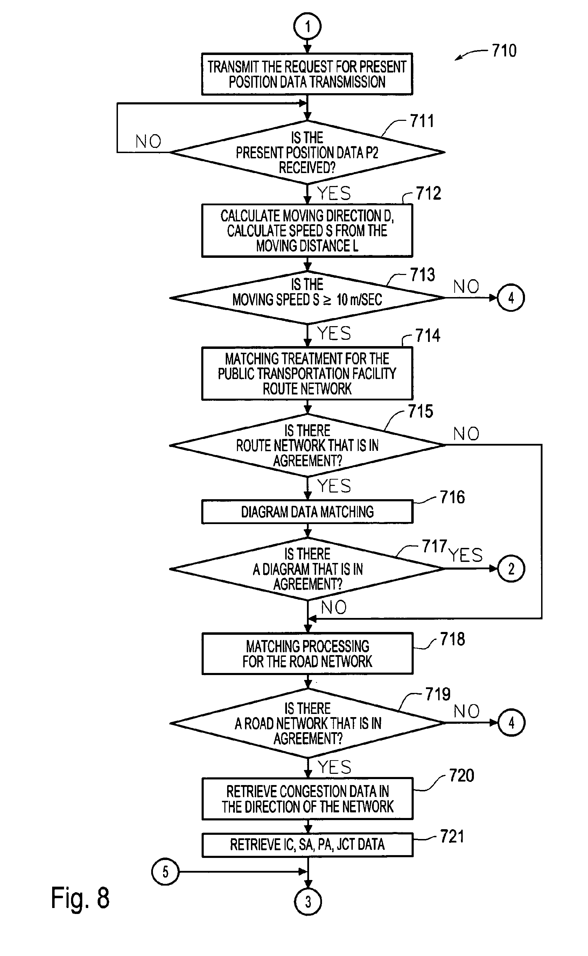

When there is no public transportation facility route network that is in agreement, on the other hand, the judgment NO is rendered in step 705, and the server 20 in step 710 (see Fig. 8) produces a present position data transmission request. Then, the wireless communication unit 22 transmits the present position data transmission request to the wireless communication unit 14.

When the number of the trains on which the user of the portable terminal M is possibly riding is not one in step 707, the server 20 renders the judgment NO and produces a present position data transmission request like in the processing in step 710. The wireless communication unit 22, then, transmits the present position data transmission request to the wireless communication unit 14.

In the portable terminal M, when the wireless communication unit 14 receives the present position data transmission request transmitted from the wireless communication unit 22 as described above, the controller 10 renders the judgment YES in step 204. Then, the controller 10 in step 205 produces a present position data P2 detected by the present position detecting unit 12, and the wireless communication unit 14 transmits the present position data P2 to the wireless communication unit 22.

In the data processing center C, when the wireless communication unit 22 receives the present position data P2 transmitted from the wireless communication unit 14 as described above, the server 20 renders the judgment YES in step 711. Based upon the present position data P1 received in step 703 and upon the present position data P2 received in step 711, the server 20 in step 712 calculates a direction D in which the user of the portable terminal M is moving and a moving speed S from, for example, the moving distance L.

When the moving speed S calculated in step 712 is greater than or equal to 10 m/sec, the server 20 renders the judgment YES in step 713. The server 20 in step 714 determines whether there is a network in agreement with the public transportation facility route network relying on the received present position data P2 stored in the storage unit 21.

When there is the public transportation facility route network in agreement with the present position data P2 in the matching processing in step 714, the server 20 in step 715 renders the judgment YES and retrieves in step 716 determines whether there is a public transportation facility corresponding to the present position on the public transportation facility route network relying on the database stored in the storage unit 21.

Here, if there is a corresponding public transportation facility, then, the train on which the user of the portable terminal M is riding can be specified, and the server 20 renders the judgment YES in step 717. If the train on which the user of the portable terminal M is riding is specified in step 717, the server 20 in step 708 retrieves the data related to the arrival time of the train at the stations stored as the diagram data in the storage unit 21.

When there is no public transportation facility route network in agreement with the present position data P2 in step 715, the server 20 renders the judgment NO, e.g., assumes that the user of the portable terminal M is utilizing an automobile which is high speed moving means other than the public transportation facility. The server 20 in step 718 effects the matching processing concerning whether the present position data P2 is in agreement with the road network stored in the database of the storage unit 21.

When there is a road network that is in agreement in step 718, the server 20 renders the judgment YES in step 719 and, then, retrieves in step 720 the road traffic data such as, for example, congestion data in a direction D of travel in the present position data P2 from a road traffic data system V through the wireless communication unit 22. When the present position data P2 is, for example, on an expressway, on an urban expressway or on a toll road, the server 20 in step 721 may also retrieve the data such as interchange, service area, parking area, junction, etc. in combination.

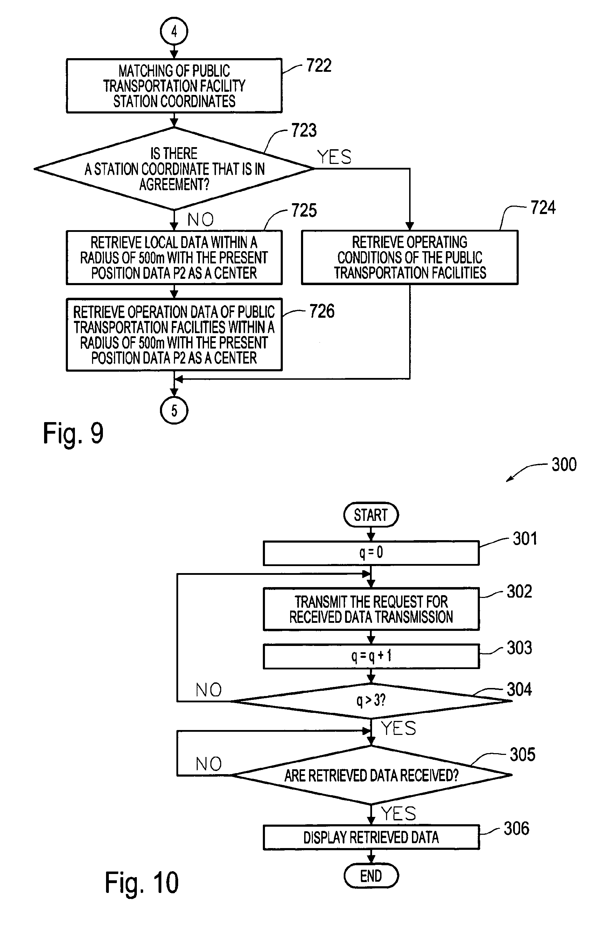

When the moving speed S of the user of the portable terminal M calculated in step 712 is smaller than 10 m/sec, the server 20 in step 713 renders the judgment NO, i.e., assumes that the user of the portable terminal M is using neither the public transportation facility nor the automobile, and the moving means is, for example, walking. Next, the server 20 in step 722 (see Fig. 9) determines whether the present position data P2 is in agreement with one of the public transportation facility station coordinates stored in the storage unit 21.

When there is a station that is in agreement, the server 20 renders the judgment YES in step 723 and retrieves in step 724 the operation data, (for example, routes and schedules) of the trains at the corresponding public transportation facility.

When there is no station in agreement, the server 20 in step 723 renders the judgment NO and retrieves the local area data (e.g., locations of surrounding facilities and services) for a radius of 500 m around the present position data P2 in step 725. When there is one or more public transportation facility station coordinates within the radius of 500 m of the present position data P2 in step 725, the server 20 retrieves the operation data of the nearest public transportation facility to the present position data P2.

Once the relevant data is retrieved according to the moving condition of the user of the portable terminal M in steps 708, 720, 721, 724, 725 and 726, the server 20 in step 709 produces a matching end command, and the wireless communication unit 22 transmits the matching end command to the wireless communication unit 14.

When the wireless communication unit 14 in the portable terminal M receives the matching end command, the controller 10 in step 206 renders the judgment YES to end the exemplary present position data transmission processing method 200 and the exemplary present position data reception/database matching processing method 700.

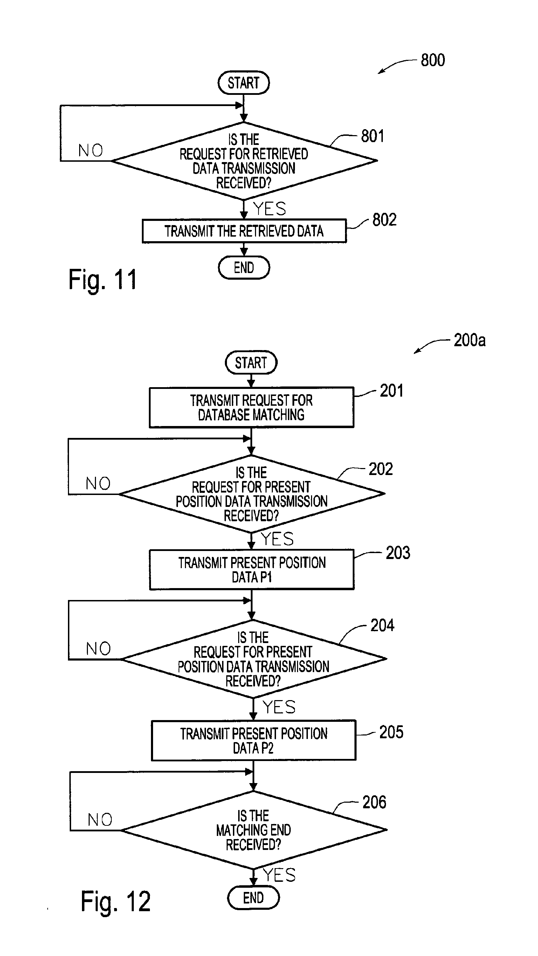

When the exemplary present position data transmission processing method 200 and the exemplary present position data reception/database matching processing method 700 end as described above, the controller 10 in the portable terminal M then processes, for example, the exemplary retrieved data reception processing method 300 (see Figs 2 and 10). In the data processing center C, on the other hand, the server 20 executes, for example, the processing of the exemplary retrieved data transmission processing method 800 (see Figs. 3 and 11) corresponding to the processing of the exemplary retrieved data reception processing method 300. The processing of the exemplary retrieved data transmission processing method 800 will now be described corresponding to the processing of the exemplary retrieved data reception processing method 300.

In the retrieved data reception processing method 300 of Fig. 10, a variable q is cleared to be q = 0 in step 301. Then, in step 302, the controller 10 requests the transmission of data (hereinafter also referred to as retrieved data) based on the moving means of the user of the portable terminal M retrieved in the exemplary present position data reception/database matching processing method 700. Then, the wireless communication unit 14 transmits the request of transmission to the wireless communication unit 22 from the controller 10.

In the portable terminal M, after the above processing in step 302, the variable data is updated to be q = q + 1 = 1 in step 303, and is judged to be NO in step 304 because thus far q ≤ 3. Here, in step 304, q > 3 is used as a reference so that the server 20 reliably receives the request of transmission from the wireless communication unit 14 through the wireless communication unit 22 in spite of any disturbance.

Thereafter, the cyclic processing of step 302 to step 304 is repeated to repetitively produce the request of transmission. Accordingly, the wireless communication unit 14 repetitively transmits the above request of transmission to the wireless communication unit 22. In step 303, however, when the variable data q is updated to q = q + 1 = 4, the judgment in step 304 becomes YES. Then, the request of transmission is no longer output from the controller 10.

In the data processing center C, when the wireless communication unit 22 receives the request of transmission of the retrieved data transmitted from the wireless communication unit 14 as described above, the server 20 renders the judgment YES in step 801 of a retrieved data transmission processing method 800 (see Fig. 11). In response to the judgment, the server 20 produces the retrieved data and, hence, the wireless communication unit 22 transmits the retrieved data to the wireless communication unit 14.

When the wireless communication unit 14 in the portable terminal M receives the retrieved data transmitted from the wireless communication unit 22 as described above, the controller 10 renders the judgment YES in step 305. When the wireless communication unit 14 receives the retrieved data in step 305, the controller 10 displays the retrieved data on a display unit 15.

According to the first exemplary embodiment as described above, when the operation processing method is executed by the input through the operation unit 11, the portable terminal M transmits the present position data to the data processing center C. Then, upon receipt of the present position data, the data processing center C executes the processing for judging the moving means, retrieves the data corresponding to the moving means, and transmits the retrieved data to the portable terminal M. Then, the portable terminal M sends the data to the display unit 15.

Therefore, without having to input the moving means, a user who is carrying the portable terminal M with him is allowed to obtain data corresponding to the moving means of the user. When the user is on board, for example, a train which is one of the public transportation facilities, for example, the train on which the user is boarding may be concretely specified. Therefore, the user is allowed to easily learn the time when the train will arrive at the object station.

Further, when the user is moving on board an automobile, he is moving at a high speed, data may be retrieved concerning the road network including road traffic data related to the direction of motion. When the automobile on which the user is boarding is traveling on a motor expressway, an urban expressway or a toll road, data may be retrieved relating to service area data, parking area data, interchange data and junction data in the direction of motion.

When the user is moving by walking, it can be determined whether there is a station of a public transportation facility near the user. When there is a station of the public transportation facility nearby, the user can receive data regarding the operation conditions such as a time table and route information related to the public transportation facility. When there is no station of the public transportation facility near the user, the user is allowed to learn local data such as shops and the like near the user.

### II. Second Exemplary Embodiment

Figs. 12 to 15 illustrate major portions of a second exemplary embodiment of the invention. The second exemplary embodiment can employ the exemplary present position data transmission processing method 200A and the exemplary present position data reception/database matching processing method 700A within the data processing center instead of the exemplary present position data transmission processing method 200 within the portable terminal M and the exemplary present position data reception/database matching processing method 700 within the data processing center as described in the first exemplary embodiment. Other constitutions are the same as those of the above first exemplary embodiment.

In the exemplary present position data transmission processing method 200A of the second exemplary embodiment, the controller 10 in step 201 requests the database matching of the user of the portable terminal M as described in the first exemplary embodiment. Then, the wireless communication unit 14 transmits the request of database matching to the wireless communication unit 22 from the controller 10.

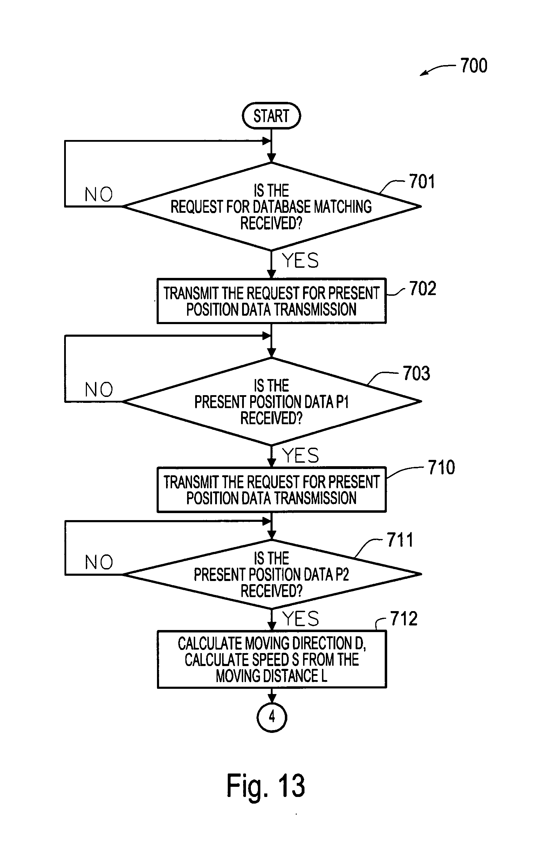

When the wireless communication unit 22 in the data processing center C receives a request of database matching transmitted from the wireless communication unit 14 as described above, the server 20 renders the decision YES in step 701 of the exemplary present position data reception/database matching processing method 700A (see Figs. 13 to 15). Upon receipt of the request of the database matching, the server 20 in step 702 produces a request for transmitting the present position data, and the wireless communication unit 22 transmits the request for transmitting the present position data to the wireless communication unit 14.

When the wireless communication unit 14 in the portable terminal M receives a request for transmitting the present position data in step 702 in the data processing center C, the controller 10 renders the judgment YES in step 202. Then, the controller 10 in step 203 produces the present position data P1 detected by, for example, the present position detecting unit 12, and the wireless communication unit 14 transmits the present position data P1 to the wireless communication unit 22.

When the wireless communication unit 22 in the data processing center C receives the present position data P1 as described above, a judgment is rendered to be YES in step 703. Then, the server 20 in step 710 produces the request for transmitting the present position data again, and the wireless communication unit 22 transmits the request for transmitting the present position data to the wireless communication unit 14.

When the wireless communication unit 14 in the portable terminal M receives the request for transmitting the present position data in step 710 in the data processing center C, the controller 10 renders the judgment YES in step 204. Then, the controller 10 in step 205 produces the present position data P2 detected by the present position detecting unit 12, and the wireless communication unit 14 transmits the present position data P2 to the wireless communication unit 22.

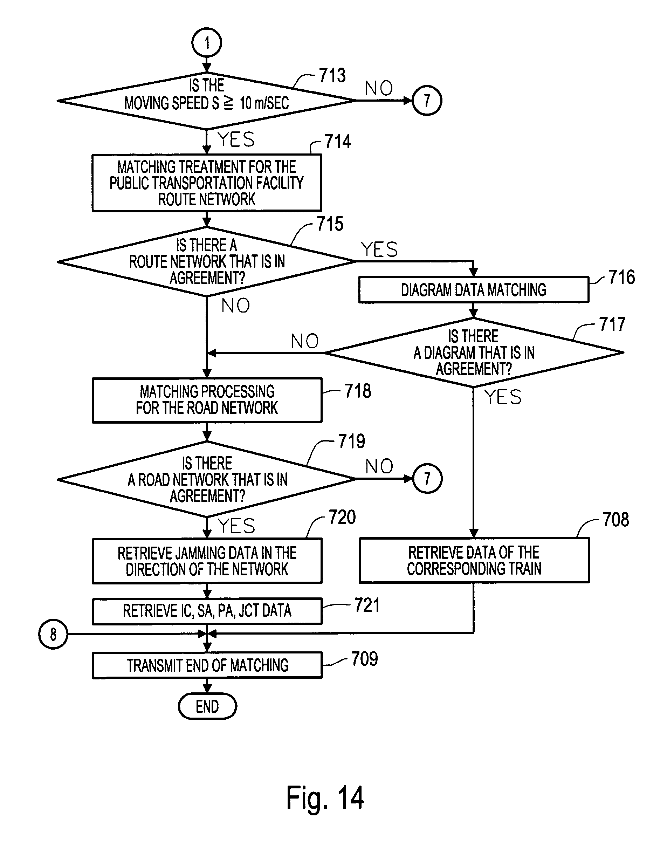

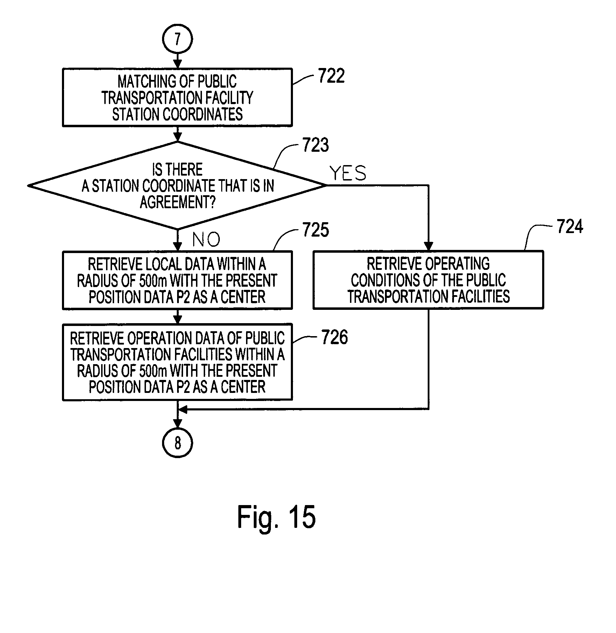

When the wireless communication device 22 in the data processing center C receives the present position data P2 transmitted from the wireless communication unit 14 as described above, the server 20 in step 711 renders the judgment YES. Relying upon the present position data P1 received in step 703 and the present position data P2 received in step 711, the server 20 in step 712 calculates the direction D of motion of the user of the portable terminal M and the moving speed S from the moving distance L. Then, the server 20 executes the processing of the exemplary present position data reception/database matching processing method 700A in accordance with the flowchart illustrated in Figs. 14 and 15 which is substantially similar to the first exemplary embodiment. The second embodiment, too, makes it possible to obtain the same effect as that of the above first exemplary embodiment.

The wireless communication unit 22 in the data processing center C may be provided with a receiver and a transmitter as separate units.

While various features of this invention have been described in conjunction with the exemplary embodiments outlined above, various alternatives, modifications, variations, and/or improvements of those features may be possible. Accordingly, the exemplary embodiments of the invention, as set forth above, are intended to be illustrative. Various changes may be made without departing from the spirit and scope of the invention.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A data processing center comprising:
a receiver that receives a present position of a portable terminal transmitted from the portable terminal;
at least one controller that:
determines a moving means that is moving the portable terminal based upon the present position; and
retrieves data related to the determined moving means; and
a transmitter that transmits the retrieved data related to the determined moving means to the portable terminal.

2. The data processing center of claim 1, wherein the at least one controller calculates a moving speed of the moving means based on a change of the present position received by the receiver, and determines the moving means at least partially based on the calculated moving speed.

3. The data processing center of claim 1 or 2, wherein the at least one controller determines the moving means to be a public transportation facility when the present position is in agreement with a route network of the public transportation facility.

4. The data processing center of one of claims 1 to 3, wherein:
the at least one controller specifies the public transportation facility based on diagram data of the public transportation facility and based on a change in the direction of the present position, and retrieves time data related to the specified public transportation facility.

5. The data processing center of one of claims 1 to 4, wherein the at least one controller determines the moving means to be an automobile when the present position is in agreement with a road network.

6. The data processing center of one of claims 1 to 5, wherein the at least one controller retrieves road traffic data based on a travel direction determined by a change of the present position.

7. The data processing center of one of claims 1 to 6, wherein the at least one controller determines that a user of the portable terminal is walking when the moving speed is slower than a predetermined speed.

8. A data processing center comprising:
a receiver that receives a present position of a portable terminal transmitted from the portable terminal;
at least one controller that:
calculates a moving speed based on a degree of change of the present position and determines a moving means of the portable terminal to be a high speed moving body when the calculated moving speed is high;
determines the high speed moving body to be part of a public transportation facility when the present position is in agreement with a route network of the public transportation facility;
specifies the moving body within the public transportation facility by comparing diagram data of the public transportation facility with the present position and a travel direction determined by a change of the present position; and
retrieves time table data related to the specified moving body; and a transmitter that transmits the retrieved time table data to the portable terminal.

9. A data processing center comprising:
a receiver that receives a present position of a portable terminal transmitted from the portable terminal;
at least one controller that:
calculates a moving speed based on a change of the present position and determines, based on the calculated moving speed, whether the moving means of the portable terminal is a high speed moving body or a low speed moving body;
compares, if the moving means is a high speed moving body, the present position with a route network of a public transportation facility, and determines whether the high-speed moving body is part of the public transportation facility;
specifies, when the moving body is determined to be part of the public transportation facility, the moving body within the public transportation facility by comparing diagram data of the public transportation facility with the present position and a travel direction determined by a change of the present position;
compares, when the moving body is determined to not be part of the public transportation facility, the present position with a road network to determine whether the moving body is an automobile;
compares, when the moving means is a low speed moving body, the present position with map data to determine whether the low-speed moving body is located in the vicinity of a station of the public transportation facility;
retrieves, when the moving body has been specified within the public transportation facility, the time table data of a the specified moving body;
retrieves, when the low speed moving body is located in the vicinity of the station of the public transportation facility, time table data of the station; and
retrieves, when the moving body is determined to be an automobile, road traffic data based on the present position and based on a travel direction determined by a change of the present position; and
a transmitter that transmits the retrieved data to the portable terminal.

10. A data providing system comprising:
a portable terminal including:
at least one controller that detects a present position, and
a transmitter that transmits the present position; and
a data processing center that includes:
a receiver that receives the present position; and
at least one controller that:
determines a moving means that moves the portable terminal based on the present position; and
retrieves data related to the determined moving means; and a transmitter that transmits the retrieved data to the portable terminal.

11. A method for providing data to a portable terminal comprising:
receiving a present position of a portable terminal transmitted from the portable terminal;
determining a moving means that moves the portable terminal based upon the present position;
retrieving data related to the determined moving means; and
transmitting the retrieved data to the portable terminal.

12. A storage medium storing a set of program instructions executable on a data processing device and usable providing data to a portable terminal, the set of program instructions comprising:
instructions for receiving a present position of a portable terminal transmitted from the portable terminal;
instructions for determining a moving means that moves the portable terminal based upon the present position;
instructions for retrieving data related to the determined moving means; and
instructions for transmitting the retrieved data to the portable terminal.
